# EUROPEAN PATENT APPLICATION

(11) **EP 1 221 452 A1**
(43) Date of publication of application: **10.07.2002**
(21) Application number: 00204746.2
(22) Date of filing: 22.12.2000
(51) Int. Cl.: C08G 18/67, C08G 18/68

(54) **Vinyl ether resins for structural applications**

(71) Applicant: DSM N.V., 6411 TE Heerlen (NL)
(72) Inventor: Udding, Jan Henderikus, 8016 AB Zwolle (NL); Wolters, Agnes Elisabeth, 8055 PV Zuthem (NL)

(57) **Abstract**

The invention relates to radically curable resin compositions comprising at least a resinous component with one or more vinyl ether group(s), and one or more reactive monomers, wherein said resinous component is obtained by reaction of a mixture of appropriate amounts of a) a compound containing at least one hydroxyl group and at least one vinyl ether group; b) a diisocyanate (or higher isocyanate) compound, reacting with formation of one or more urethane group(s); and c) a compound chosen from the groups of C₂₋₆ glycols, C₅₋₂₀ polyols having 2-5 hydroxyl groups and (un)saturated hydroxyl terminated polyester compounds, with 1-5 free hydroxyl groups and from 2-50 monomeric ester units, the content of vinyl ether groups in the resin composition being from 0.5 to 50 wt.%, calculated as the weight percentage of the HVE-compound relative to the total weight of the resin composition (excluding the weight of additives, fillers and the like),
the total acid number of the radically curable resin composition being less than 10 mg of KOH per g, and wherein the curing is effected with the aid of a radical-forming system that is unstable in the temperature range from -20°C to + 110°C.

The invention also relates to a process for the preparation of such resin compositions and uses thereof.

## Description

The invention relates to radically curable resin compositions comprising at least (i) a resinous component with one or more vinyl ether group(s), and (ii) one or more reactive monomers. As meant herein the term "resinous component with one or more vinyl ether group(s)" means that said component is a resin with one or more vinyl ether group(s) being covalently built- in into the resin forming part of the radically curable resin composition before curing thereof into structural parts or other structural elements. The term "reactive monomers" means in the context of this application, that the monomers can react, under the curing conditions, with the resinous component with one or more vinyl ether group(s) and with, optionally present, other unsaturated resinous components with formation of covalent bonds. The radically curable resin compositions according to the invention are particularly suitable for use as structural resins. In the context of this application "structural resins" are understood to be resins that are used for the production of moulded parts and other structural elements with a thickness of at least 1 mm. The invention also relates to a method for the preparation of such curable resin compositions, and uses thereof.

Radiation curable coating compositions comprising an (ethylenically) unsaturated polyester resin wherein a component having at least two vinyl ether groups is built-in covalently, are disclosed in EP-B-0322808. The compositions disclosed, however, are only suitable for use in coating applications and cannot be used for being cured into structural parts or other structural elements. In fact, only Example 8 of said patent application relates to such composition with structurally incorporated vinyl ether groups, namely one at an average of two vinyl ether groups per molecule of an unsaturated polyester reacted with (vinyl ether) "half-capped" isocyanate. EP-B-0322808, however is mainly directed to coating compositions where the vinyl ether component is not structurally incorporated in (i.e. is separate from) the unsaturated polyester, and thus it cannot be learned form said reference that incorporated vinyl groups are particularly suitable. In EP-B-0322808 curing always takes place by ionising or ultraviolet light radiation. It is to be noticed, that the compositions from EP-B-0322808 still "radiation cure" after 2 weeks, which means that curing is rather slow and rest enthalpy remains quite high.

The resin compositions from EP-B-0322808 thus suffer from the disadvantage of insufficient curing, which also results in undesirable sticky surfaces in case the layer of coating used is too thick. Such problems are similar to those generally encountered for resin compositions based on an unsaturated resin and a monomer that can be cross-linked with it (see, for instance, an article by N. Boulkertous in Kunststoffe **84** (1994), 1597-1599). There is still a great need for structural resins that, upon curing, yield products having a dry, non-sticky surface, low rest enthalpy and excellent mechanical properties for being used in structural resins. Preferably the curing and hardening occur quickly, and reactivity of the resin is at the same level (or even better than) of the compositions known thusfar. In particular, for applications in, for instance, rockbolts and chemical anchoring, reactivity should at least be at the same level as that of polymeric methacrylates as are being used in such applications in vinyl ester urethane / methacrylate resins. Finally, handling of the curable resin compositions should be safe and easy. "Quick curing" is in the context of the present application in particular understood to be quick curing at a low temperature, that is, at a temperature of between -20°C and +110°C, preferably already at ambient temperature, which will usually be between -15°C and +35°C.

The aim of the invention, now, is to provide radically curable resin compositions comprising at least (i) a resinous component with one or more vinyl ether group(s) and (ii) one or more reactive monomers, which do not present the aforementioned disadvantages and can be used in structural applications.

This aim is surprisingly achieved according to the invention when the resinous component with one or more vinyl ether group(s) in the radically curable resin composition is a resin obtained by reaction of a mixture of appropriate amounts of:
a) a first compound (the HVE-compound) containing at least one hydroxyl group and at least one vinyl ether group, and
b) a second compound (the D/HIC-compound), being a diisocyanate (or higher isocyanate), reacting with formation of one or more urethane group(s), and
c) a third compound (the G/P/HP-compound) chosen from the groups of (1) C₂₋₆ glycols, (2) C₅₋₂₀ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units (the G/P/HP-compound), or mixtures thereof,
the content of vinyl ether groups in the resin composition being from 0.5 to 50 wt.%, calculated as the weight percentage of the HVE-compound relative to the total weight of the resin composition (excluding the weight of additives, fillers and the like), the total acid number of the radically curable resin composition with the reactive monomer(s) being less than 10 mg of KOH per g, and when the curing is effected with the aid of a radical-forming system that is unstable in the temperature range from -20°C to + 110°C.

The total acid number as intended in this application is the acid number determined according to ISO-2114. It is important for the resin compositions according to the invention that the total acid number (i.e. the acid number determined according to ISO-2114) of the resin composition is less than 10 mg of KOH per g. The curing of the resin compositions according to the invention is to be effected with the aid of a radical-forming system that is unstable in the temperature range from -20°C to + 110°C. In the context of the present invention, however, the curing also may be carried out at higher temperature, for instance by hot-curing in the range of 110°C to 180°C.

Suitably the HVE-compound is a vinyl ether monomer having a general structure according to formula (I)

(A-CH=CH-O)ₙ-R (I)

or a mixture of such vinyl ether monomers,
where
- A: represents hydrogen or an alkyl group with 1-3 C atoms, and where, if there is more than one A, the individual A groups may be the same or different
- R: either represents an aliphatic group, optionally branched, with 2-20 C atoms, which may also contain a cyclohexyl or a 1,4-dimethylenecyclohexyl group and in the carbon chain optionally also one or more O and/or S atoms, which group is substituted with at least one hydroxyl group at a position or positions being at least 2 C-atoms removed from the vinyl ether group, and which further may be substituted with one or more amino groups, which optionally are substituted with one or two alkyl groups with 1-3 C atoms, or represents a polyethylene glycol or a polypropylene glycol with an average chain length of between 2 and 10 glycol units, and
- n: is 1, 2, 3 or 4.

The hydroxylated vinyl ether monomer compounds (HVE-compounds) as are used for obtaining the resin compositions according to the invention are vinyl ethers (or mixtures thereof) having the general structure according to formula (I) above.

Such hydroxylated vinyl ether monomer compounds are commercially available. Examples of hydroxylated vinyl ethers that are suitable for use in the resinous component of the resin compositions according to the invention are: cyclohexanedimethanol monovinyl ether, diethylene glycol monovinyl ether, ethylene glycol butyl vinyl ether, ethylene glycol monovinyl ether, hexanediol monovinyl ether, hydroxybutyl vinyl ether.

The hydroxylated vinyl ether compound (HVE-compound) structurally incorporated into the resinous component of the curable resin compositions according to the invention is preferably a mono- and/or divinyl ether monomer having at least one free hydroxyl group. The resin compositions then obtained show the best properties in most applications. The hydroxylated vinyl ether compound structurally incorporated into the resinous component of the resin compositions according to the invention is most preferably hydroxybutyl vinyl ether. The resin compositions thus obtained have particularly favourable properties with respect to both curing time (and gel time) and hardening at the surface (evident from particularly dry, non-sticky surfaces after curing).

The diisocyanate or higher isocyanate (D/HIC) compound as used in the context of the present invention may be any (linear, branched or cyclic) aliphatic and/or aromatic diisocyanate or higher isocyanate, or prepolymers thereof. Specifically suitable D/HIC compounds are, for instance, toluene diisocyanate (TDI), diphenylmethane diisocyanate (MDI), hexane diisocyanate (HDI), isophoron diisocyanate (IPDI) and isocyanurates.

The G/P/HP-compounds as used in the context of the present invention can suitably be chosen from the groups of (1) C₂₋₆ glycols, (2) C₅₋₂₀ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units. Suitable glycols, for instance, are (mono-, di- or tri-) ethylene glycol or propylene glycol, 1,4-butanediol, 1,6-hexanediol, 1,4-cyclohexanediol. Suitable C₅₋₂₀ polyols having 2-5 hydroxyl groups, for instance, are pentaerythritol, neopentyl glycol, glycerine, trimethylolpropane, hexanetriol, bisphenol-A and ethoxylated derivatives thereof, sorbitol, 1,4-cyclohexane dimethanol, 1,2-bis(hydroxyethyl)cyclohexane. Suitable saturated or (ethylenically) unsaturated hydroxyl terminated polyester compounds, for instance, are chosen from the group of dihydroxy(meth)acrylates and other (meth)acrylic esters of alcohols having 1-12 C-atoms, 2,2-dimethyl-3-hydroxypropyl-2,2-dimethyl-3-hydroxypropionate, and so on. Alternatively hydroxyl terminated saturated or unsaturated polyester resins can be used; examples are unsaturated polyester (pre)polymers or oligomers, or mixtures thereof. Also mixtures of any of the compounds belonging to the group of G/P/HP-compounds can suitably be used.

The molar ratio of (HVE-compound) : (D/HIC-compound) : (G/P/HP-compound) as used in the context of the present invention is chosen appropriately in such way that the content of vinyl ether groups in the resin composition is from 0.5-50, preferably from 1.0-35 wt.%, calculated as the weight percentage of the HVE-compound relative to the total weight of the resin composition (excluding the weight of additives, fillers and the like). If no other resinous components are present in the resin compositions according to the invention, the molar ratio of (HVE-compound) : (D/HIC-compound) : (G/P/HP-compound) will be chosen to be approximately 2 : 2 : 1. By reacting the HVE-, D/HIC- and G/P/HP-compounds in about said ratio resins are obtained containing at least one vinyl ether group and at least two urethane groups.

In a preferred embodiment of the present invention, the resinous component with one or more vinyl ether group(s) is obtained from a reaction mixture wherein the first component is formed by a mixture of an HVE-compound and a hydroxylated (meth)acrylate (HA) compound.

Suitable HA-compounds as can be used in the present invention are hydroxyethyl acrylate (HEA), hydroxyethyl methacrylate (HEMA) and hydroxypropyl methacrylate (HPMA).

For the reactions between the HVE-compound (and optionally the HA-compound), the D/HIC-compound and the G/P/HP-compound as necessary for the structural incorporation of the component with one or more vinyl ether group(s) into the resin, reaction conditions can be used as are well-known to the skilled man from the synthesis of vinyl ester resins or vinyl ester urethane resins, hereinafter referred to. Examples of suitable methods are described in the experimental part hereof. In addition reference is made to general literature such as "Chemistry and Technology of Isocyanates", H. Ulrich, Wiley & Sons, ISBN 0-471-96371-2, pages 347-403.

The resin compositions according to the present invention may be used as such, but also may be blended with an additional resin component which may be chosen from the well-known groups of unsaturated polyester resins, vinyl ester resins, vinyl ester urethane resins, or mixtures thereof.

In case the resin compositions according to the invention are blends of a resin containing one or more vinyl ether group(s) and such other resin, together with a reactive monomer, of course, the content of vinyl ether groups in the blended resin composition still should be from 0.5-50, preferably from 1.0-35 wt.%, calculated as the weight percentage of the HVE-compound relative to the total weight of the resin composition (excluding the weight of additives, fillers and the like). Moreover, also the total acid number of such radically curable blended resin composition with the reactive monomer(s) should be less than 10 mg of KOH per g.

As the unsaturated polyester in the radically curable resin compositions according to the invention both when being used as a component for the resinous component containing one or more vinyl ether group(s), as well as when used for blending with the resin composition, preferably use is made of unsaturated polyesters with an acid number of less than 10 mg of KOH per g. Such unsaturated polyesters and their preparation are commonly known. They can be prepared from unsaturated polyesters having a higher acid number through e.g. a reaction with alcohols, glycols, ethylene carbonate, propylene carbonate, epoxy compounds, isocyanates or amines. See e.g. EP-A-0254186. It is also possible to use e.g. dicyclopentadiene-modified unsaturated polyesters. See e.g. G. Pritchard (Ed.), Developments in Reinforced Plastics - 1 (1980), Applied Science Publishers Ltd, London, ISBN 0-85334-919-3, pp. 64-67. Preferably, the acid number is from 0 to 5 mg of KOH per g, most preferably in the range of from 0 to 3 mg of KOH per g.

All the known vinyl esters can be used as the vinyl esters (also referred to as epoxy (meth)acrylates in the literature) in the curable resin compositions according to the invention. Ethoxylated bisphenol-A-di(meth)acrylates and (unsaturated) polyesters with terminal (meth)acrylate groups are also classed as vinyl esters. The vinyl esters usually already have an acid number of less than 10 mg of KOH per g. Such vinyl esters and their preparation are commonly known. See e.g. G. Pritchard (mentioned above), pp. 29-58.

All the known vinyl ester urethanes can be used as the vinyl ester urethanes (also referred to as urethane (meth)acrylates in the literature) in the curable resin compositions according to the invention. The vinyl ester urethanes usually also have an acid number of less than 10 mg of KOH per g. Such vinyl ester urethanes and their preparation are commonly known. See e.g. US-A-3876726.

Vinyl ester resins (epoxy (meth)acrylates) and vinyl ester urethane resins (urethane (meth)-acrylates) are usually very suitable for chemically stable applications.

In addition to the resinous component with one or more vinyl ether group(s), and optionally the additional (un)saturated resin, the resin compositions according to the invention also contain one or more of the other monomers commonly used in resin compositions. The most common of such other monomers are styrene and (meth)acrylates. The group of the other monomers usually consists of monomers from the group of compounds that can react with the ethylenic unsaturation of unsaturated resins. Examples of such other monomers are vinylaromatic compounds, vinyl esters and vinyl nitriles. Examples are vinyl acetate, vinyl propionate, vinyl versatate, α-methylstyrene, p-methylstyrene, vinyl toluene and acrylic or methacrylic (hydroxy)esters of alcohols having 1 to 12 C atoms. It is in the context of the present invention also possible to use such other monomers with more than one unsaturation, for example butanediol di(meth)acrylate, divinyl benzene, diallyl phthalate, triallyl cyanurate or the diallyl and triallyl ethers of trimethylol propane. Moreover, also hydroxylated vinyl ether monomers may be used as reactive monomer in the resin compositions according to the invention. Examples of such suitable vinyl ether monomers to be used as reactive monomer are dipropylene glycol divinyl ether, hexanediol divinyl ether, neopentyl glycol divinyl ether, tetraethylene glycol divinyl ether, tripropylene glycol divinyl ether, butanediol divinyl ether, cyclohexanedimethanol divinyl ether, cyclohexanedimethanol monovinyl ether, diethylene glycol divinyl ether, ethylene glycol divinyl ether, hexanediol divinyl ether, hydroxybutyl vinyl ether, triethylene glycol divinyl ether, triethylene glycol methyl vinyl ether and trimethylol propane trivinyl ether.

The curable resin compositions according to the invention are cured with the aid of a radical-forming system that is unstable in the temperature range from -20°C to + 110°C.

"Radical-forming system" is here understood to be a compound that can act as a radical former, optionally in combination with an accelerator and/or heat, up to temperature levels in the range of 110°C to 180°C. It is of course also possible to use mixtures of radical-forming compounds and/or accelerators. It is preferred to use peroxides as the radical former, for example diacyl peroxides, hydroperoxides, percarbonates, peresters and mixtures hereof. The peroxide that is used to cure the curable resin compositions according to the invention may be any peroxide known to a person skilled in the art. Examples are methylethylketone peroxide, diacetyl peroxide, cyclohexanone peroxide, acetylacetone peroxide, dibenzoyl peroxide, di-p-chlorobenzoyl peroxide, di-t-butyl peroxide, cumene hydroperoxide, phthaloyl peroxide, succinyl peroxide, dilauryl peroxide, acetylcyclohexanesulphonyl peroxide, t-butyl perbenzoate or t-butyl peroctanoate, cyclohexane percarbonate and bis-(4-t-butylcyclohexyl) percarbonate, etc.

Suitable accelerators are for example tertiary amines and/or metal salts, which - if they are at all added - can be added to the resin compositions in relatively small amounts, preferably in weight amounts of 0.01 to 2 wt.%. Suitable metal salts are for example cobalt octanoate or cobalt naphthenoate, and vanadium, potassium, calcium, copper, manganese or zirconium carboxylates. Suitable amines are for example aniline derivatives and N,N-bisalkylaryl amines, such as N,N-dimethylaniline, N,N-diethylaniline, N,N-dimethylparatoluidine, N,N-bis(hydroxyalkyl)aryl amine, N,N-bis(β-hydroxyethyl) aniline, N,N-bis(β-hydroxyethyl)toluidine, N,N-bis(β-hydroxypropyl)aniline and N,N-bis(β-hydroxypropyl)toluidine. Accelerators that are also suitable are the polymer amines, for example those obtained in polycondensation of N,N-bis(β-hydroxyethyl)aniline with a dicarboxylic acid.

As noticed before, the curing also may be carried out at higher temperature, for instance by hot-curing in the range of 110°C to 180°C. Such curing then may be done in the absence of an accelerator.

The resin compositions according to the invention may also contain reinforcing materials and/or fillers. As the reinforcing materials use can be made of for example glass fibres, plastic fibres (Dyneema™, Twaron™, polyester felt, etc.), natural fibres (jute, sisal, flax) and carbon fibres. It is also possible to use other reinforcing materials, for example hollow or solid glass beads, or plate-shaped materials such as mica. Suitable fillers are for example kaolin, calcium carbonate, heavy spar, slate flour, talcum, aluminium trihydrate, cement and sand. Pigments and colourants may optionally also be present in the resin composition. It should be noted that composites containing fillers cannot usually be cured with the aid of e.g. UV radiation, especially if the layer thickness of the moulded parts to be cured is greater than 1 mm.

It is also possible to add thixotropic agents such as colloidal silica, highly reactive silicic acids, bentones and (optionally hydrogenated) oils, such as castor oil, to the resin composition.

A person skilled in the art will be able to easily determine which reinforcing materials and/or fillers must optionally be added to the resin composition according to the invention to obtain an optimum result in the field of application in which the resin composition will be used. The amounts of such reinforcing materials and fillers are not critical.

It should be noted that the patent literature describes various curable resin compositions which, in addition to an unsaturated polyester, also include a vinyl ether monomer, but they are predominantly resin compositions that are cured by means of ultraviolet radiation, and are as such only suitable for applications in which curing takes place in thin layers, for example in coatings. The layer thickness is then usually not more than 0.5 mm. The parts obtained are not suitable for use as structural materials.

JP-A-09059329 for example describes UV-curable compositions containing vinyl ether monomers for use in coatings, adhesives and putties, which contain vinyl ether monomers and preferably hydroxybutyl vinyl ether. It has already been mentioned above that composites containing fillers cannot usually be cured with the aid of e.g. UV radiation, especially if the layer thickness of the moulded parts to be cured is greater than 1 mm.

EP-A-0322808 (already discussed hereinabove) describes resin compositions that can also be cured by means of radiation, which contain vinyl ether monomers which each contain at least two vinyl units in addition to an unsaturated polyester and which are used in coatings. It is by no means obvious that such resin compositions containing vinyl ethers (as in JP-A-09059329 and EP-A-0322808) can with such surprisingly good results be used to prepare structural materials when a different curing mechanism is used.

US-A-5470897 describes radically curable coating compositions for the coating of wood substrates which may contain a vinyl ether as a separate component, next to unsaturated polyesters containing at least one allyl (i.e. a β,γ-ethylenically unsaturated) ether group. However, no example of the use of such composition is shown in practice. Moreover, this reference does not teach that the acid number should be lower than 10 as in the present invention should.

EP-A-0028841 describes resin compositions that are suitable for the production of mouldings via SMC or BMC techniques. The aim of said patent is to obtain mouldings with an aesthetically appealing surface and with a good dimensional stability (shrink-resistant behaviour). The favourable surface properties aimed at in said patent are obtained by using in formulations containing so-called low-profile additives, in addition to styrene, a (vinyl ether) monomer that does not readily copolymerise with styrene. LPAs are substances that ensure that the resin composition shows no, or virtually no, shrinkage during and after the curing. As common curing temperatures is mentioned 95°C to 180°C. EP-A-0028841 mentions methyl, ethyl and butyl vinyl ether as vinyl ether monomers. Such vinyl ethers, however, do not result in accelerating the curing speed. It should incidentally also be added that unsaturated resins with a high acid number, e.g. higher than 25 mg of KOH per g, are usually used in SMC and BMC applications.

EP-A-0377927 describes curable resin compositions for anaerobic curing to obtain rock bolts, in which specific azole compounds have to be used to accelerate the curing. The very long list of ethylenically unsaturated monomers that can be used in those resin compositions also includes vinyl ethers and it is mentioned that such monomers can also be used mixed with other polymerisable oligomers, e.g. with an unsaturated polyester. This application contains no indications of the actual use of vinyl ethers in such compositions. None of the examples contains a vinyl ether monomer. Moreover, said application in no way shows that such resin compositions could also be used outside the field of rock bolts.

DE-A-3940138 describes, also for use in rock bolts, curable resin compositions based on an unsaturated polyester and a compound that can polymerise with it - completely or partly replacing styrene - most specifically various esters (in which one or more cycloaliphatic residual groups containing unsaturations must be present to obtain a good result). The text of said patent also specifies that the residual group concerned may also be present in a molecule that also contains an allyl or vinyl ether group, but the advantages of the use of such ethers over the use of the aforementioned esters are in no way evident.

In a co-pending, but at the date of filing of the present patent application yet unpublished patent application (PCT/NL/00/00375) of the present applicant, curable resin compositions for use in structural applications are being described, which comprise an unsaturated resin, a vinyl ether monomer (separate therefrom) which can be cross-linked with said resin and one or more other monomers, the unsaturated resin having an acid number of less than 10 mg KOH per g and the curing being done with the aid of a radical-forming system as is also being used for the resin compositions of the present invention. Said co-pending patent application, however, does not show nor suggest the use of structurally incorporated vinyl ether components.

As has been mentioned above, the amount of (structurally incorporated in the resinous component with one or more vinyl ether group(s)) hydroxylated vinyl ether monomer (HVE-compound) in the radically curable resin compositions according to the invention is generally 0.5-50 wt.%, more preferably 1.0-35 wt.%, relative to the weight of the total resin composition, wherein the amount of HVE-compound is calculated as such, i.e. not taken into account the weight of its reaction product with the D/HIC-compound and the G/P/HP-compound.

Wherever this application refers to the weight of the total resin composition this is each time understood to be the total weight of the resin composition as such, that is, excluding the reinforcing materials and/or fillers employed. The total weight of the resin compositions is hence each time calculated as the total weight of only the resinous component with one or more vinyl ether group(s), the optional additionally present (un)saturated resin, the reactive monomer(s) and the radical-forming system.

More in particular the amount of vinyl ether monomer in the resinous component is 5-20 wt.%, relative to the weight of the total resin compositions. At those vinyl ether group contents the resin composition yields the best results in the various applications. At vinyl ether group contents of less than 0.5 wt.% the effect of the presence of the vinyl ether group(s) will be virtually unnoticeable, while no additional effect on the properties is observed at vinyl ether group concentrations above 60 wt.%.

The present inventors have found that it may be advantageous in the radically curable resin compositions according to the present invention that, next to the hydroxylated vinyl ether compound structurally incorporated therein, also an amount of a vinyl ether monomer is present which is not structurally incorporated in the resinous component, but is present as reactive monomer. Such separate vinyl ether monomer preferably also will have a structure according to formula (I), the meaning of A, R and n in said formula being the same as mentioned above. In case structurally incorporated and separate vinyl ether compounds are simultaneously present in the resin compositions, the total content the vinyl ether compounds still will be from 5-60 wt.%, more preferably 7-30 wt.%, relative to the weight of the total resin composition, wherein the amount of incorporated HVE-compound is preferably from 5-20 wt.%. Calculation of these amounts is done as indicated above, i.e. for the incorporated amount not taken into account the weight of its reaction product with the D/HIC-compound and the G/P/HP-compound.

The resin compositions according to the invention are particularly suitable for use as structural resins, they have a short curing time and harden excellently. Thanks to the excellent hardening of the surface, the structural materials obtained with the resin compositions also have a dry surface immediately after production. The resin compositions which comprise a resinous component with one or more vinyl ether group(s), according to the invention , moreover, differ in a favourable respect from the prior art resin compositions based on styrene and (meth)acrylates, but without such vinyl ether group(s), in terms of environmental and health aspects.

The invention also relates to a process for the preparation of a radically curable resin composition comprising at least (i) a resinous component with one or more vinyl ether group(s) and (ii) one or more reactive monomers. In the process according to the present invention the resin composition is prepared by
A. first reacting in a mixture of appropriate amounts of
   (a) a first compound (the HVE-compound) containing at least one hydroxyl group and at least one vinyl ether group, and
   (b) a second compound (the D/HIC-compound), being a diisocyanate (or higher isocyanate), reacting with formation of one or more urethane group(s), and
   (c) a third compound (the G/P/HP-compound) chosen from the groups of (1) C₂₋₆ glycols, (2) C₅₋₂₀ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units (the G/P/HP-compound), or mixtures thereof,
   to obtain a resinous component with one or more vinyl ether group(s) wherein the content of vinyl ether groups in the resin is from 0.5 to 50 wt.%, calculated as the weight percentage of the HVE-compound relative to the total weight of the resin composition (excluding the weight of additives, fillers and the like),
   and
B. dissolving said resin in one or more reactive monomer(s), and adding any fillers and/or additives that may be required, with the proviso that the total acid number of the resin composition so obtained is less than 10 mg of KOH per g (as determined according to ISO-2114).

Adding a radical-forming system that is unstable in the temperature range from -20°C to +110°C then can cure the resin composition.

Suitably the HVE-compound is a vinyl ether monomer having a general structure according to formula (I), as described hereinbefore.

It is preferred that the resin composition additionally is blended with a resin from the group of unsaturated polyester resins, vinyl ester resins and vinyl ester urethane resins, with the proviso that the total acid number of the resin composition so obtained is less than 10 mg of KOH per g (as determined according to ISO-2114).

The invention also relates to the use of radically curable resin compositions according to the invention (or prepared according to the process thereof) for the production of moulded parts or structural materials. The invention may then be used in a wide range of fields of application, for example in roofing, in flooring, in putties, in rock bolts, chemical anchoring, etc.

The radically curable resin compositions according to the invention can also be used in so-called open-mould techniques such as hand-lay-up and spray-up, and in reinforced materials to replace concrete elements ("rebars"), in linings of pipes and the like ("re-lining"), and in techniques like pultrusion, reaction-transfer moulding (RTM), vacuum-injection, etc. For a general description of such resin-processing techniques and applications see e.g. P.K. Malick and S. Newman (eds.), Composite Materials Technology (1990), Hanser Publishers, Munich, Vienna, New York, ISBN 3-446-15684-4. In such techniques curing initiated by UV light is usually not suitable on account of the layer thickness of the moulded parts etc. and on account of the use of fillers and/or other additives.

In particular the resin compositions according to the present invention are very advantageously used in flooring, roofing and rock bolts.

The invention will now be elucidated with reference to a few examples, without however being limited to the compositions presented in the examples.

### General:

### DSC tests:

The rest enthalpy (J/g) of cured material, an adequate indication for the degree of conversion, was calculated from results of Differential Scanning Calorimetry (Mettler, TOLEDO™ DSC 821, STAR system). The samples used were cast between 1-mm rims and mylar foil, and were cured with the curing system as indicated in the tables below. The heating profile for the dynamic run (25°C to 200°C) was 5°C/min. Integration of the peaks gives the amount of energy (in mJoules), which after dividing by the sample weight (in mg) gives the rest enthalpy (J/g).

### Abbreviations used:

- BDDMA: 1,4-butanedioldimethacrylate
- DIPPT: Diisopropoxy para-toluidine
- DPG: Dipropylene glycol
- HBUVE: Hydroxybutyl vinyl ether
- HPMA: Hydroxypropyl methacrylate
- Luci20: Lucipal 20™, a product of AKZO Nobel, which contains 20 wt.% of dibenzoyl peroxide in calcium carbonate
- Luci50: Lucidol CH-50™, a product of AKZO Nobel, which contains 50 wt.% of dibenzoyl peroxide in dicyclohexyl phthalate
- MDI: diphenylmethane diisocyanate
- Tempol: 4-Hydroxy-2,2,6,6-tetramethylpiperidine-N-oxyl
- Styr: Styrene

Assessments of properties of the resins were done by determining one or more of the following parameters, using techniques according to DIN 16945 (at 25°C in a thermostatted bath, statistically, respectively in a well-defined test tube):
- Gel t: *gel time*: time associated with interval 25-35°C in minutes
- Exth t: *cure time:* time associated with interval 25°C to reaching of exothermal peak in minutes
- Exth p: temperature level of the exothermal peak in °C
- Rest ΔH: Rest enthalpy in J/g
- Surf.Ass.: Relative Assessment of surface cure properties by comparing dryness of the set surface (+++ is much better than +; + is acceptable)

The following resins (and comparative resins) were used in the examples (and comparative examples):

### Vinyl ether urethane resin A:

500 g of MDI (diphenylmethane diisocyanate) was added to a stirred reactor and was reacted gradually with 134 g of dipropylene glycol (DPG), under the influence of 0,15 wt.% of dibutyltin laurate as catalyst. The temperature was allowed to reach a maximum of 55 °C. Then 232 g of hydroxybutyl vinyl ether (HBUVE) was added gradually and was reacted while the temperature was allowed to reach 99 °C. After dissolving in an appropriate amount of BDDMA a 70 wt.% solution of the resin, Resin A, was obtained. The molar ratio of HBUVE : MDI : DPG is 2 :2 : 1.

### Vinyl ester urethane resin B:

500 g of MDI was added to a stirred reactor and was reacted gradually with 134 g of DPG, under the influence of 0,15 wt.% of dibutyltin laurate as catalyst. The temperature was allowed to reach a maximum of 55 °C. Then 288 g of HPMA was added gradually and was reacted while the temperature was allowed to reach 99 °C. The molar ratio of HPMA : MDI : DPG is 2 :2 : 1. After dissolving in an appropriate amount of HPMA a 70 wt.% solution of the resin, Resin B, was obtained.

### Resin C:

As resin C a commercially available bisphenol-A-ethoxylated dimethylacrylate of AKZO (Diacryl 101)™ was used.

### Resin D:

As resin D a commercially available bisphenol-A-based unsaturated polyester, ATLAC 382™ from DSM Composite Resins was used which was modified with ethylene carbonate to adjust to an acid value of 2 mg KOH/g.

### Vinyl ether urethane resin E:

500 g of MDI was added to a stirred reactor and was reacted gradually with 134 g of DPG, under the influence of 0,15 wt.% of dibutyltin laurate as catalyst. The temperature was allowed to reach a maximum of 55 °C. Then 232 g of hydroxybutyl vinyl ether (HBUVE) was added gradually and was reacted while the temperature was allowed to reach 99 °C. After dissolving in an appropriate amount of styrene a 70 wt.% solution of the resin, Resin E, was obtained. The molar ratio of HBUVE : MDI : DPG is 2 :2 : 1.

### Results:

The results of the examples (and comparative examples) are shown in the table. For convenience and ease of comparison the amounts indicated in the table are in molar amounts (of unsaturations) and/or in parts by weight.

From the results it follows clearly that resin compositions according to the invention (see examples) have favourable properties on curing. It further has been shown that all resin compositions according to the invention are suitable for being used in structural applications. The resin compositions of Examples 2.1-2.5 are very suitable for being used in chemical anchoring.

In Examples 1.1 and 1.2 varying amounts of monomer are added to resin A. In Examples 2.1 to 2.5 varying amounts of resin A are added to resin B. In Examples 3.1 to 3.10 varying amounts of resin A are combined with resin C. In Examples 4.1 to 4.7 varying amounts of resin A or resin E are added to resin D. Of these examples nos. 2.1, 3.1, 3.6, 4.1 and 4.5 are comparative ones.

Curing of the resin compositions occurred respectively with either
- 0.74 wt.% of DIPPT, 10% Luci 20 and 750 ppm Tempol (for 1.1 to 3.10); or
- 0.5 wt.% of DIPPT and 2% Luci 50 (for 4.1 to 4.7)
each quickly being mixed into the resin composition.

The results (where available) are shown in the summarising table:

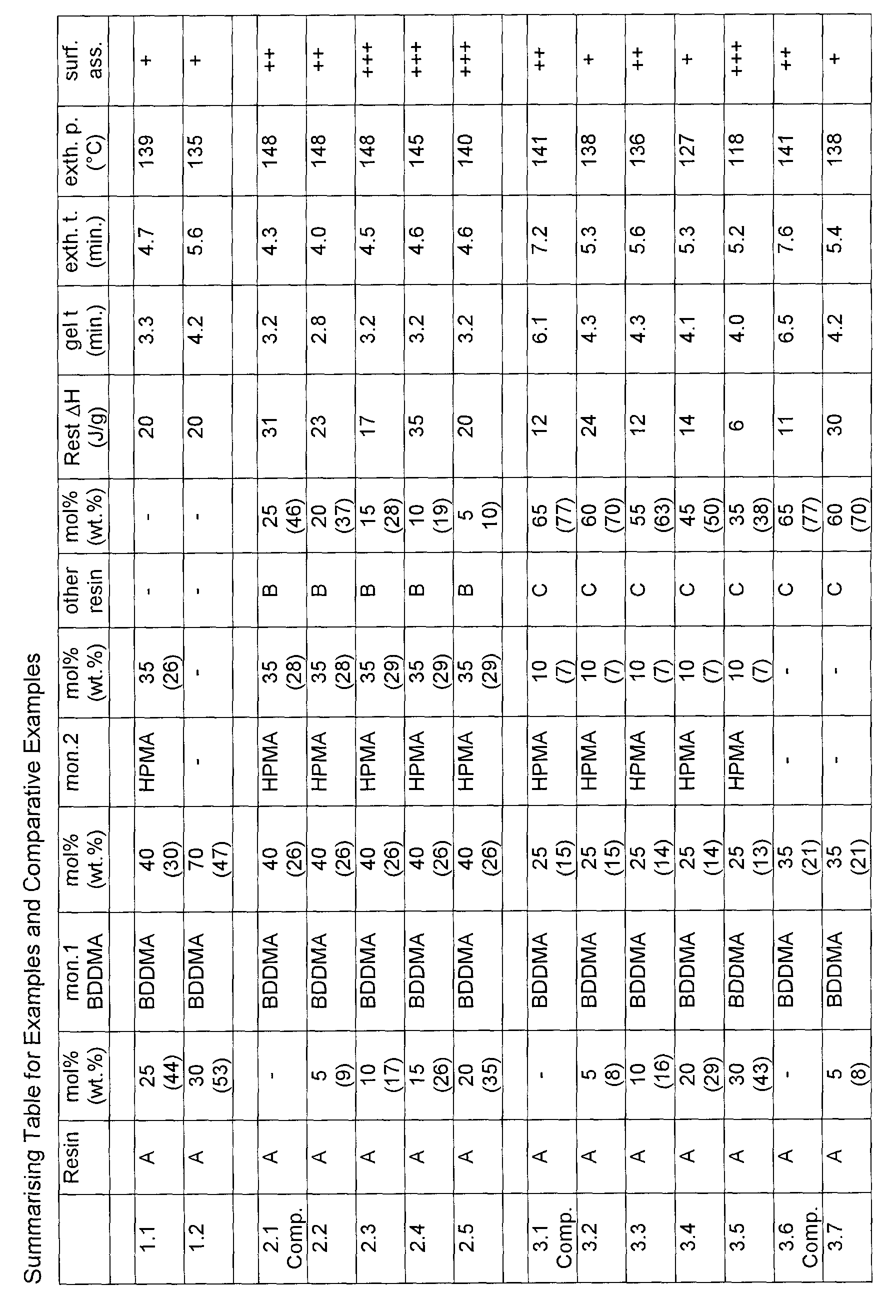

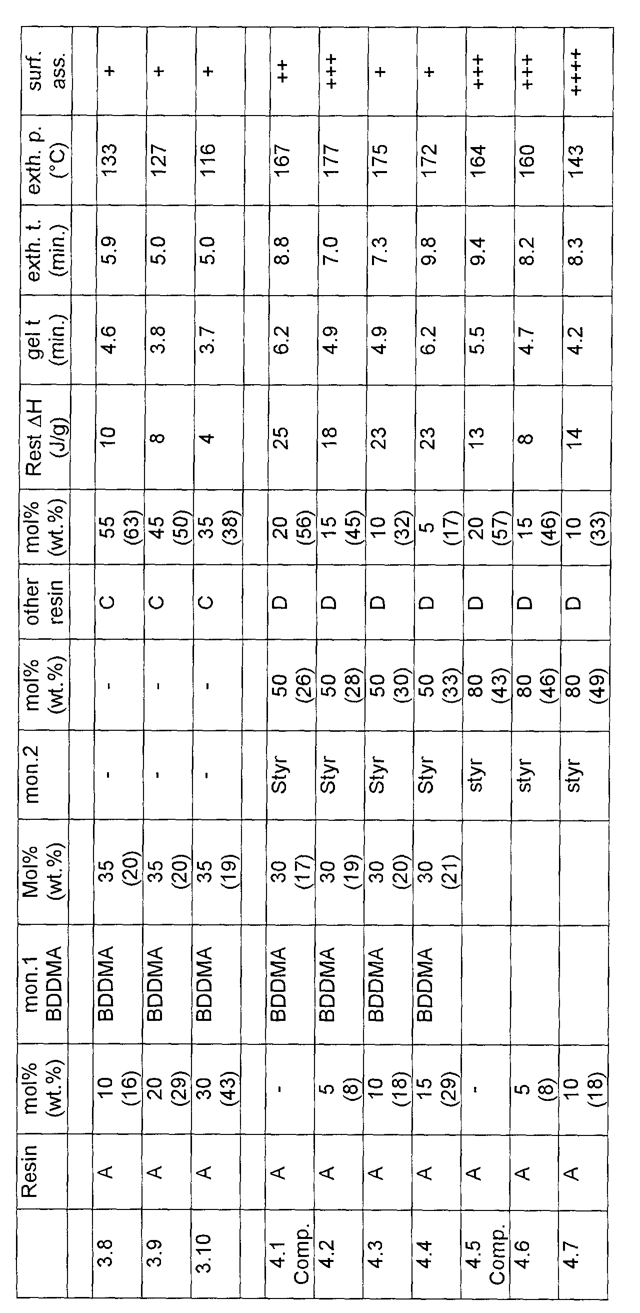

## Claims

1. Radically curable resin compositions comprising at least (i) a resinous component with one or more vinyl ether group(s), and (ii) one or more reactive monomers,
**characterised in that**
the resinous component with one or more vinyl ether group(s) in the curable resin composition is a resin obtained by reaction of appropriate amounts of:
a) a first compound (the HVE-compound) containing at least one hydroxyl group and at least one vinyl ether group, and
b) a second compound (the D/HIC-compound), being a diisocyanate (or higher isocyanate), reacting with formation of one or more urethane group(s), and
c) a third compound (the G/P/HP-compound) chosen from the groups of (1) C₂₋₆ glycols, (2) C₅₋₂₀ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units (the G/P/HP-compound), or mixtures thereof,
the content of vinyl ether groups in the resin composition being from 0.5 to 50 wt.%, calculated as the weight percentage of the HVE-compound relative to the total weight of the resin composition (excluding the weight of additives, fillers and the like),
the total acid number of the radically curable resin composition with the reactive monomer(s) being less than 10 mg of KOH per g,
and **in that** the curing is effected with the aid of a radical-forming system that is unstable in the temperature range from -20°C to + 110°C.

2. Curable resin compositions according to Claim 1, **characterised in that** the content of vinyl ether groups in the resin composition being from 10 to 35 wt.%

3. Curable resin compositions according to any of Claims 1 or 2,
**characterised in that** the HVE-compound is a vinyl ether monomer having a general structure according to formula (I), or a mixture of such vinyl ether monomers,
(A-CH=CH-O)ₙ-R (I)
wherein
A represents hydrogen or an alkyl group with 1-3 C atoms, and where, if there is more than one A, the individual A groups may be the same or different
R either represents an aliphatic group, optionally branched, with 2-20 C atoms, which may also contain a cyclohexyl or a 1,4-dimethylenecyclohexyl group and in the carbon chain optionally also one or more O and/or S atoms,
which group is substituted with at least one hydroxyl group at a position or positions being at least 2 C-atoms removed from the vinyl ether group, and which further may be substituted with one or more amino groups, which optionally are substituted with one or two alkyl groups with 1-3 C atoms,
or represents a polyethylene glycol or a polypropylene glycol with an average chain length of between 2 and 10 glycol units,
and
n is 1, 2, 3 or 4.

4. Curable resin compositions according to Claim 3, **characterised in that** the HVE-compound is a mono- and/or divinyl ether monomer having at least one free hydroxyl group.

5. Curable resin compositions according to Claim 4, **characterised in that** the HVE-compound is hydroxybutyl vinyl ether.

6. Curable resin compositions according to any one of Claims 1-5,
**characterised in that** the resinous component with one or more vinyl group(s) is obtained from a reaction mixture wherein the first component is formed by a mixture of an HVE-compound and a hydroxylated (meth)acrylate (HA) compound.

7. Curable resin compositions according to any one of Claims 1-6,
**characterised in that** the resin composition apart from the amount of HVE-compound in the resinous component with one or more vinyl ether group(s) also contains an amount of vinyl ether monomer as reactive monomer, and that the total content of vinyl ether compounds (HVE-compound plus reactive monomer) is from 5-60 wt.%, relative to the weight of the total resin composition.

8. Curable resin compositions according to any one of Claims 1-7,
**characterised in that** the resin composition is further blended with an unsaturated polyester resin or vinyl ester resin or vinyl ester urethane resin, or mixture thereof.

9. Process for the preparation of a radically curable resin composition comprising at least (i) a resinous component with one or more vinyl ether group(s), and (ii) one or more other reactive monomers, **characterised in that**
A. first there are reacted, in a mixture of appropriate amounts of
(a) a first compound (the HVE-compound) containing at least one hydroxyl group and at least one vinyl ether group, and
(b) a second compound (the D/HIC-compound), being a diisocyanate (or higher isocyanate), reacting with formation of one or more urethane group(s), and
(c) a third compound (the G/P/HP-compound) chosen from the groups of (1) C₂₋₆ glycols, (2) C₅₋₂₀ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units (the G/P/HP-compound), or mixtures thereof,
thereby obtaining a resinous component with one or more vinyl ether group(s) and at least two urethane groups,
wherein the content of vinyl ether groups in the resin composition is from 0.5 to 50 wt.%, calculated as the weight percentage of the HVE-compound relative to the total weight of the resin composition (excluding the weight of additives, fillers and the like), and
B. dissolving said resin in one or more reactive monomers,
C. and adding any fillers and/or additives that may be required, with the proviso that the total acid number of the, optionally unsaturated, prepolymer so obtained is less than 10 mg of KOH per g (as determined according to ISO-2114).

10. Process for the preparation of curable resin compositions according to Claim 9, **characterised in that** the content of vinyl ether groups in the resin composition being from 10 to 35 wt.%

11. Use of curable resin compositions according to any one of Claims 1-8 or of curable resin compositions prepared according to Claim 9 or 10 for the production of moulded parts or structural materials.

12. Use of resin compositions according to any one of Claims 1-8 or of resin compositions prepared according to Claim 9 or 10 in flooring, roofing, rock bolts or chemical anchoring.
